# EUROPEAN PATENT APPLICATION

(11) **EP 4 195 780 A1**
(43) Date of publication of application: **14.06.2023**
(21) Application number: 20948139.9
(22) Date of filing: 06.08.2020
(51) Int. Cl.: H04W 48/18, H04W 12/06

(54) **TERMINAL, NETWORK NODE, AND COMMUNICATION METHOD**

(71) Applicant: NTT DOCOMO, INC., Chiyoda-Ku Tokyo 100-6150 (JP)
(72) Inventor: MINOKUCHI, Atsushi, Tokyo 100-6150 (JP); ZUGENMAIER, Alf, 80335 Munich (DE)
(74) Representative: Hoffmann Eitle
(86) International application number: PCT/JP2020/030183
(87) International publication number: WO 2022/029957

(57) **Abstract**

A disclosed terminal includes a transmitter configured to transmit a registration request corresponding to a first network method to a network node in a first PLMN (Public Land Mobile Network); a receiver configured to receive an authentication request relating to a second PLMN according to a second network method from the network node; and a controller configured to determine to use an authentication method of the second PLMN, based on the authentication request, the authentication method of the second PLMN being different from an authentication method of the first PLMN, wherein the transmitter transmits a response corresponding to the authentication method of the second PLMN to the network node.

## Description

### TECHNICAL FIELD

The present invention relates to a terminal, a network node, and a communication method in a communication system.

### BACKGROUND ART

In the 3rd Generation Partnership (3GPP) project, a wireless communication system called 5G or NR (hereinafter, the wireless communication system is referred to as "5G" or "NR") is being discussed in order to achieve further increase in system capacity, further increase in data transmission speed, and further decrease in the delay in the wireless section. In 5G, various wireless technologies are being discussed in order to achieve a throughput of 10 Gbps or higher and to meet the requirement of a delay of 1 ms or less in the wireless section.

In NR, a network architecture including 5GC (5G Core Network) corresponding to EPC (Evolved Packet Core), which is the core network in the LTE (Long Term Evolution) network architecture, and NG-RAN (Next Generation-Radio Access Network) corresponding to E-UTR_AN (Evolved Universal Terrestrial Radio Access Network), which is the RAN (Radio Access Network) in the LTE network architecture, is being discussed (for example, Non-Patent Document 1).

### [RELATED-ART DOCUMENT]

### [Non-Patent Document]

[Non-Patent Document 1] 3GPP TS 23. 501 V15. 9. 0(2020-03)

### DISCLOSURE OF INVENTION

### PROBLEMS TO BE SOLVED BY THE INVENTION

As the 5G network progresses, it is expected that 4G networks will terminate services and only 5G networks will be operated. On the other hand, depending on the operating policies of operators in each country, there may be a case in which only 4G networks continue to be operated. In such a situation, for example, roaming from a network in which only the 4G network is operated to a network in which only the 5G network is operated, occurs. However, the difference between the network architectures has made authentication of roaming terminals difficult in conventional methods.

The present invention has been made in view of the foregoing and is intended to ensure that authentication is to be successfully performed during roaming between different network architectures.

### MEANS FOR SOLVING THE PROBLEMS

According to the disclosed technique, a terminal is provided. The terminal includes
a transmitter configured to transmit a registration request corresponding to a first network method to a network node in a first PLMN (Public Land Mobile Network);
a receiver configured to receive an authentication request relating to a second PLMN according to a second network method from the network node; and
a controller configured to determine to use an authentication method of the second PLMN, based on the authentication request, the authentication method of the second PLMN being different from an authentication method of the first PLMN, wherein
the transmitter transmits a response corresponding to the authentication method of the second PLMN to the network node.

### ADVANTAGEOUS EFFECT OF THE INVENTION

The disclosed technique allows successful authentication during roaming between different network architectures.

### BRIEF DESCRIPTION OF THE DRAWINGS

[Fig. 1] Fig. 1 is a diagram illustrating an example of a communication system;
[Fig. 2] Fig. 2 is a diagram illustrating an example of a communication system under a roaming environment;
[Fig. 3] Fig. 3 is a diagram illustrating an authentication example (1);
[Fig. 4] Fig. 4 is a diagram illustrating an authentication example (2);
[Fig. 5] Fig. 5 is a diagram illustrating an example of a communication system according to an embodiment of the present invention;
[Fig. 6] Fig. 6 is a sequence diagram illustrating an example of authentication according to an embodiment of the present invention;
[Fig. 7] Fig. 7 is a diagram illustrating an example of a functional configuration of a base station 10 according to an embodiment of the present invention;
[Fig. 8] Fig. 8 is a diagram illustrating an example of a functional configuration of a terminal 20 according to an embodiment of the present invention; and
[Fig. 9] Fig. 9 is a diagram illustrating an example of a hardware configuration of the base station 10 and the terminal 20 according to an embodiment of the present invention.

### DESCRIPTION OF EMBODIMENTS

Hereinafter, embodiments of the present invention will be described with reference to the accompanying drawings. The embodiments described below are examples, and the embodiments to which the present invention is applied are not limited to the following embodiments.

In operating a wireless communication system according to an embodiment of the present invention, conventional techniques are used as appropriate. However, the conventional techniques may include, for example, a conventional LTE, but may not be limited to a conventional LTE. The term "LTE" as used herein shall also have a broad meaning including LTE-Advanced and LTE-Advanced or later forms (e.g., NR) or wireless LAN (Local Area Network), unless otherwise specified.

Further, according to embodiments of the present invention, a wireless parameter or the like may be "configured" to be a predetermined value, or a wireless parameter indicated by the network node 30 or the terminal 20 may be configured.

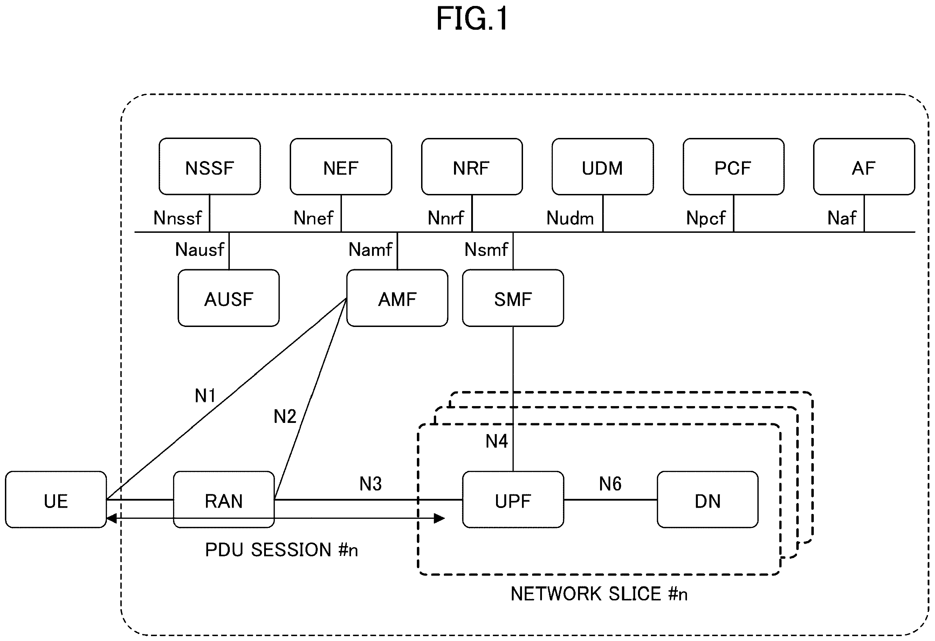

Fig. 1 is a diagram illustrating an example of a communication system. As illustrated in Fig. 1, the communication system includes a UE which is a terminal 20, and a plurality of network nodes 30. Hereinafter, one network node 30 corresponds to each function, but a plurality of functions may be implemented by one network node 30, or a plurality of network nodes 30 may implement one function. Also, the "connection" described below may be a logical connection or a physical connection.

RAN (Radio Access Network) is a network node 30 having wireless access functions. The RAN may include a base station 10 and is connected to UE, AMF (Access and Mobility Management Function), and UPF (User plane function). The AMF is a network node 30 having functions such as a RAN interface termination, a NAS (Non-Access Stratum) termination, registration management, connection management, reachability management, and mobility management. The UPF is a network node 30 having functions such as: a PDU (Protocol Data Unit) session point for external interconnection with a DN (Data Network); routing and forwarding packets; and QoS (Quality of Service) handling of the user plane. The UPF and DN constitute a network slice. In the wireless communication network according to an embodiment of the present invention, multiple network slices are constructed.

The AMF is connected to UE, RAN, SMF (Session Management Function), NSSF (Network Slice Selection Function), NEF (Network Exposure Function), NRF (Network Repository Function), UDM (Unified Data Management), AUSF (Authentication Server Function), PCF (Policy Control Function), and AF (Application Function). AMF, SMF, NSSF, NEF, NRF, AUSF, PCF, and AF are network nodes 30 interconnected via their respective service-based interfaces, Namf, Nsmf, Nnssf, Nnef, Nnrf, Nudm, Nausf, Npcf, and Naf.

The SMF is a network node 30 having functions such as session management, Internet Protocol (IP) address assignment and management of the UE, Dynamic Host Configuration Protocol (DHCP) function, Address Resolution Protocol (ARP) proxy, and roaming function. The NEF is a network node 30 which has the capability to indicate capabilities and events to other NFs (Network Functions). The NSSF is a network node 30 having functions such as selecting the network slice to which the UE is to be connected, determining the NSSAI (Network Slice Selection Assistance Information) to be allowed, determining the NSSAI to be configured, and determining the AMF to which the UE is to be connected. The PCF is a network node 30 having functions of controlling the policy of the network. The AF is a network node 30 having functions of controlling an application server. The NRF is a network node 30 which functions to discover NF instances which provide services.

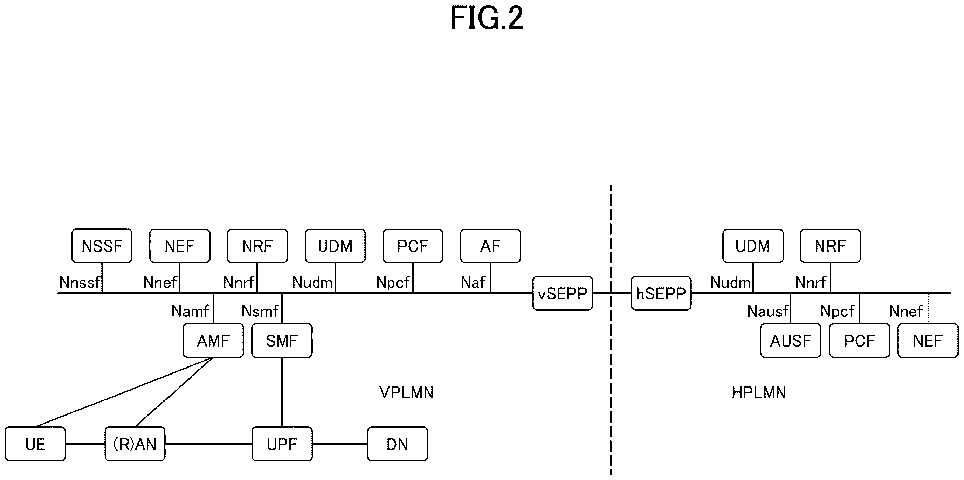

Fig. 2 is a diagram illustrating an example of a communication system in a roaming environment. As illustrated in Fig. 2, the network includes a UE, the terminal 20, and a plurality of network nodes 30. Hereinafter, one network node 30 corresponds to each function, but a plurality of functions may be implemented by one network node 30, or a plurality of network nodes 30 may implement one function. Also, the "connection" described below may be a logical connection or a physical connection.

The RAN is a network node 30 having a wireless access function and is connected to the UE, AMF, and UPF. The AMF is a network node 30 having functions such as termination of the RAN interface, termination of the NAS, registration management, connection management, reachability management, and mobility management. The UPF is a network node 30 having functions such as: a PDU session point to the outside interconnected with the DN; routing and forwarding of packets; QoS handling of the user plane; and the like. The UPF and DN comprise network slices. In the wireless communication network according to an embodiment of the present invention, multiple network slices are constructed.

The AMF is connected to UE, RAN, SMF, NSSF, NEF, NRF, UDM, AUSF, PCF, AF, and SEPP (Security Edge Protection Proxy). AMF, SMF, NSSF, NEF, NRF, AUSF, PCF, and AF are network nodes 30 interconnected via their respective service-based interfaces, Namf, Nsmf, Nnssf, Nnef, Nnrf, Nudm, Nausf, Npcf, and Naf.

The SMF is a network node 30 having functions such as session management, IP address assignment and management of the UE, DHCP function, ARP proxy, roaming function, and the like. The NEF is a network node 30 having the capability to indicate capabilities and events to other NFs. The NSSF is a network node 30 having functions such as selecting the network slice to which the UE is to be connected, determining the NSSAI to be allowed, determining the NSSAI to be configured, and determining the AMF set to which the UE is to be connected. The PCF is a network node 30 having functions of controlling the policy of the network. The AF is a network node 30 having functions of controlling an application server. The NRF is a network node 30 which functions to discover NF instances which provide services. SEPP is a non-transparent proxy that filters messages on the control plane between PLMNs (Public Land Mobile Network). The vSEPP illustrated in Fig. 2 is SEPP in the visited network and hSEPP is SEPP in the home network.

As illustrated in Fig. 2, the UE is in a roaming environment connected to the RAN and the AMF in a VPLMN (Visited PLMN). VPLMN and HPLMN (Home PLMN) are connected to each other via vSEPP and hSEPP. The UE can communicate with the UDM of the HPLMN, for example, via the AMF of the VPLMN.

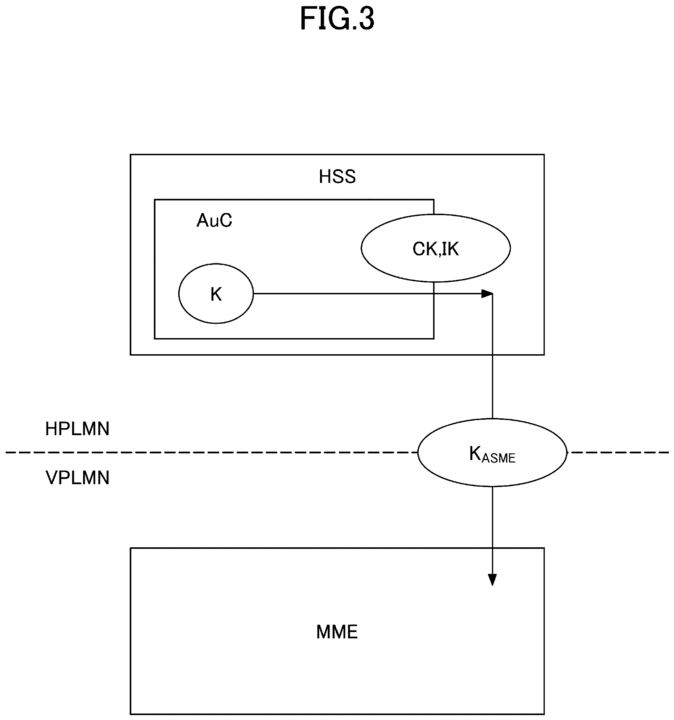

Fig. 3 is a diagram illustrating an example (1) of authentication. Fig. 3 is an example of authentication during roaming in a 4G network of LTE. As illustrated in Fig. 3, in HPLMN, AuC (Authentication Centre) derives keys CK and IK from a key K and passes them to HSS (Home Subscriber Server). The HSS derives the K_{ASME} from the keys CK and IK and passes them to the MME of the VPLMN. MME performs EPS (Evolved Packet System)-AKA (Authentication and Key Agreement) authentication using K_{ASME}. As a result of such authentication, the MME and UE of the VPLMN share the key K_{ASME}. The ASME (Access Security Management Entity) is an entity that receives an access network key from the HSS and its role may be performed by the MME.

When EPS-AKA authentication is performed, an "Authentication data request" message is sent from the MME to the HSS. The "Authentication data request" message includes the International Mobile Subscriber Identity (IMSI), the SN identity (Serving Network identity) and the network type. As a response to an Authentication data request, the HSS sends an Authentication data response message to the MME. The "Authentication data response" message contains an EPS authentication vector.

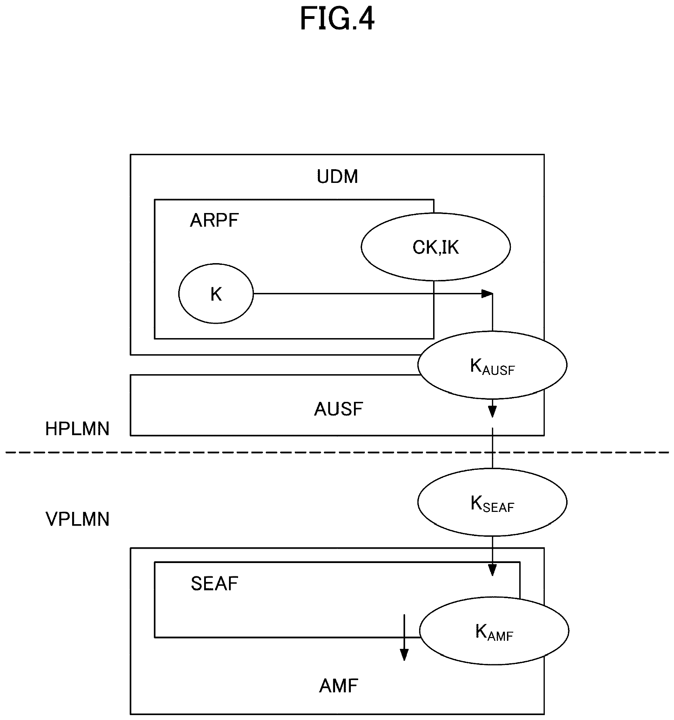

Fig. 4 is a diagram illustrating an example (2) of authentication. Fig. 4 is an example of authentication at roaming in the NR 5G network. As illustrated in Fig. 4, in HPLMN, an ARPF (Authentication Credential Repository and Processing Function) derives keys CK and IK from a key K and passes them to UDM. UDM derives K_{AUSF} from the keys CK and IK and passes it to AUSF. AUSF derives K_{SEAF} from K_{AUSF} and passes it to SEAF (Security Anchor Function) of VPLMN. SEAF performs 5G-AKA authentication using K_{SEAF}. As a result of such authentication, the VPLMN SEAF and UE share the key K_{SEAF}. The SEAF derives the key K_{AMF} from the key K_{SEAF}.

When 5G-AKA authentication is performed, a "Nausf_UEAuthentication_Authenticate Request" message is sent from SEAF to AUSF. In addition, the AUSF sends a "Nudm_UEAuthentication_Get Request" message to the UDM/ARPF. The "Nausf_UEAuthentication_Authenticate Request" message and the "Nudm_UEAuthentication_Get Request" message contain SUCI (Subscription Concealed Identifier) or SUPI (Subscription Permanent Identifier). The UDM/ARPF then sends a "Nudm_UEAuthentication_Get Response" message containing the authentication vector to the AUSF.

Note that authentication in 5G networks may be performed by EAP-AKA' authentication rather than by 5G-AKA authentication.

Here, when the terminal 20 having 4G and 5G capabilities roams from the 4G network of the HPLMN to the 5G network of the VPLMN, there may be a case in which the 5G-method authentication cannot be performed. For example, the key K_{SEAF} cannot be derived from the key K_{ASME}, and it is not secure to send CK and IK between networks.

Thus, when the terminal 20 having 4G and 5G capabilities roams from the 4G network of the HPLMN to the 5G network of the VPLMN, the authentication may be performed by falling back to the 4G method or EPS-AKA.

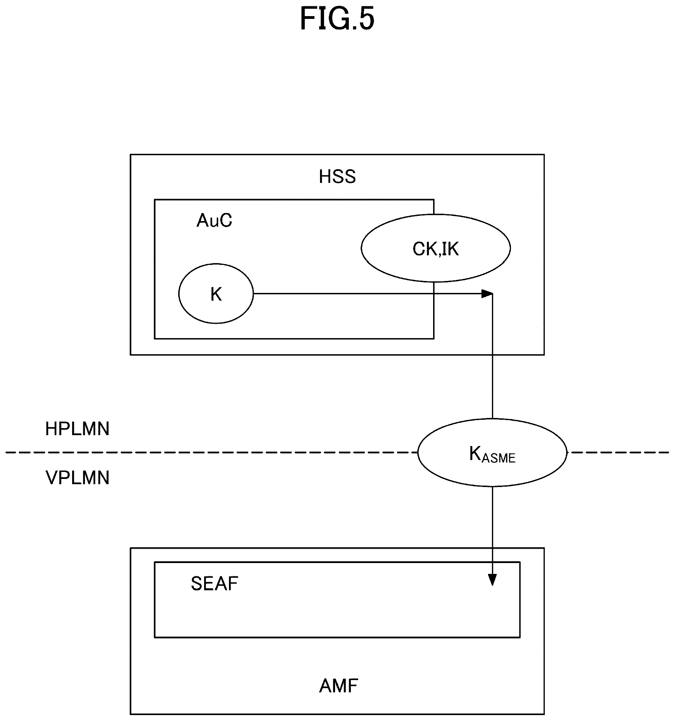

Fig. 5 is a diagram illustrating an example of a communication system according to an embodiment of the present invention. As illustrated in Fig. 5, the SEAF of the VPLMN may operate as if it were an MME. HPLMN HSS and VPLMN SEAF may perform EPS-AKA authentication and may acquire the key K_{ASME}.

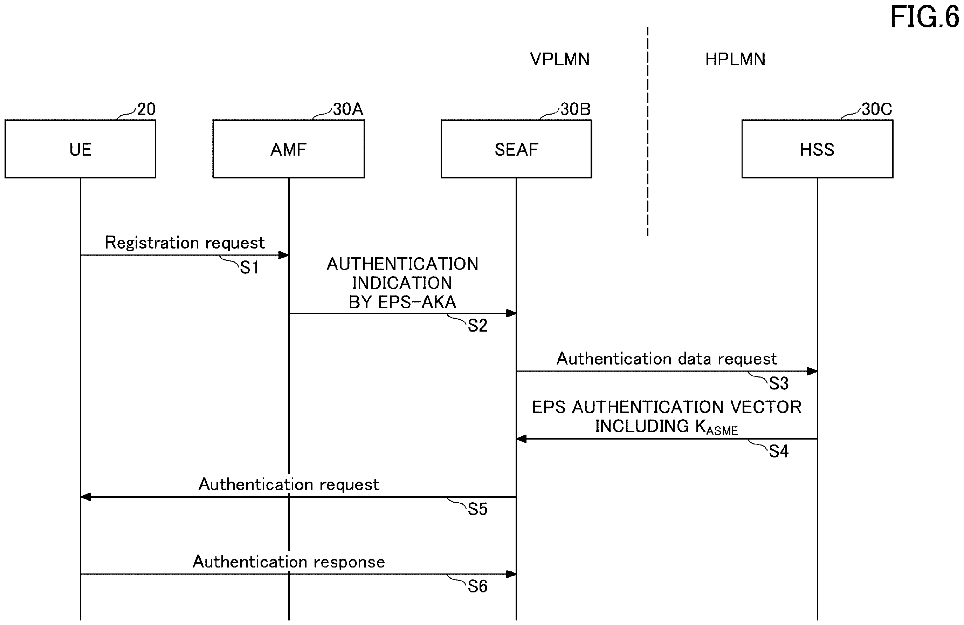

Fig. 6 is a sequence diagram illustrating an example of authentication in an embodiment of the present invention. In step S1, the UE 20 roaming to the VPLMN transmits a registration request to the AMF via a "Registration request" message. The message may be a message of 5G method. Subsequently, the AMF 30A of the VPLMN determines that authentication is to be performed by 4G method, depending on the local configuration related to the HPLMN information, and indicates to SEAF 30B to perform EPS-AKA authentication (S2). Subsequently, the SEAF 30B of the VPLMN acts as if it were an MME for the HPLMN and sends an "Authentication data request" message to HPLMN HSS 30C (S3). Subsequently, the HSS 30C sends an "Authentication data response" message containing an EPS authentication vector to the SEAF 30B (S4).

In step S5, the SEAF 30B includes the content of the 4G "User authentication request" message in the 5G NAS message "Authentication request" and transmits it to UE 20. Subsequently, the UE 20 determines that the authentication request is an authentication request of the 4G method by obtaining the random challenge RAND (Random number) and authentication token AUTN (Authentication token) for the EPS challenge contained in the 4G "User authentication request" message. A response is calculated in response to successful AUTN verification by USIM (Universal Subscriber Identity Module). The UE 20 sends a 4G "User authentication response" to the SEAF 30B.

The 5G NAS message "Authentication request" in step S5 may include an information element that explicitly indicates the authentication of the 4G method. It may also be implicitly indicated to the UE 20 that the 4G-method authentication is to be performed because the RAND or AUTN contained in the 5G NAS message "Authentication request" is for the EPS challenge rather than for the 5G authentication challenge. For example, the UE 20 may determine whether to perform 4G or 5G authentication based on the RAND or AUTN bit length.

According to the above embodiment, AMF/SEAF in a 5G VPLMN can authenticate the UE 20 roaming to the VPLMN even if HPLMN of the UE 20 does not support 5G.

That is, authentication can be successfully performed during roaming between different network architectures.

### (Device configuration)

Next, a functional configuration example of the base station 10, the network nodes 30, and the terminal 20 that performs the processing and operations described above will be described. The base station 10, the network nodes 30, and the terminal 20 include functions of implementing the embodiments described above. However, each of the base station 10, the network nodes 30, and terminal 20 may include only some of the functions in the embodiment.

### <Base station 10 and network node 30>

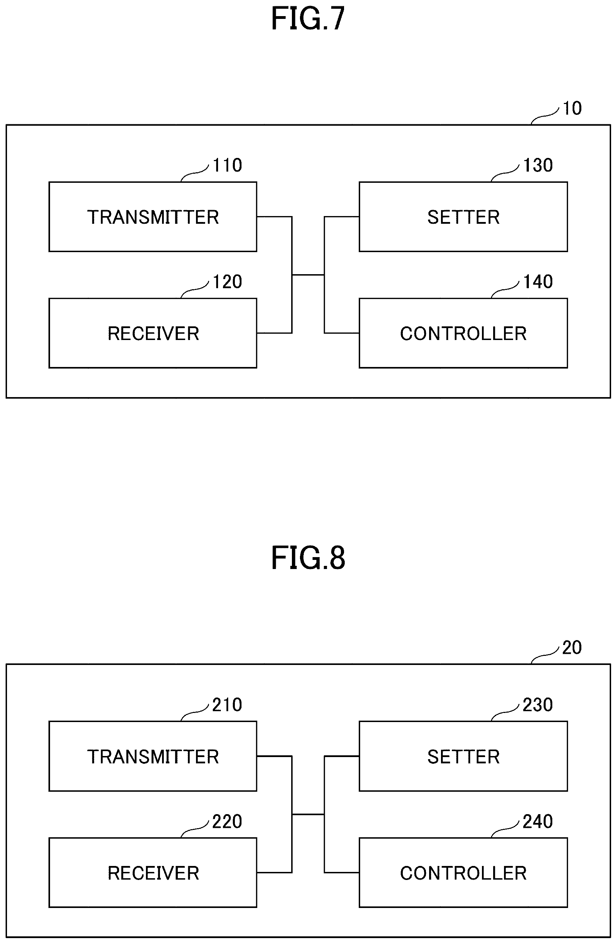

Fig. 7 is a diagram illustrating an example of a functional configuration of the base station 10. As illustrated in Fig. 7, the base station 10 includes a transmitter 110, a receiver 120, a setter 130, and a controller 140. The functional configuration illustrated in Fig. 7 is only one example. If the operation according to the embodiments of the present invention can be performed, the functional classification and the functional names of the functional units may be any functional classification and any functional names. The network node 30 may have the same functional configuration as the base station 10. The network node 30 having a plurality of different functions on the system architecture may also consist of a plurality of network nodes 30 separated by functions.

The transmitter 110 includes a function to generate a signal to be transmitted to the terminal 20 or other network node 30 and transmit the signal via wire or wirelessly. The receiver 120 includes a function to receive various signals transmitted from the terminal 20 or other network node 30, and acquire, for example, information of a higher layer from the received signals.

The setter 130 stores the preset setting information and various setting information to be transmitted to the terminal 20 in the storage device and reads the preset setting information from the storage device if necessary. The contents of the setting information are, for example, information relating to security or authentication between NF services.

The controller 140 performs processing relating to security or authentication between NF services as described in the embodiments. The controller 140 performs processing relating to communication with the terminal 20. A functional unit relating to signal transmission in the controller 140 may be included in the transmitter 110, and a functional unit relating to signal reception in the controller 140 may be included in the receiver 120.

### <Terminal 20>

Fig. 8 is a diagram illustrating an example of a functional configuration of the terminal 20. As illustrated in Fig. 8, the terminal 20 includes a transmitter 210, a receiver 220, a setter 230, and a controller 240. The functional configuration illustrated in Fig. 8 is only one example. If the operation according to the embodiments of the present invention can be performed, the functional classification and the names of the functional units may be any functional classification and any functional names.

The transmitter 210 creates a transmission signal from the transmission data and wirelessly transmits the transmission signal. The receiver 220 receives various signals wirelessly and acquires signals of higher layers from the received signal of the physical layer. The receiver 220 has a function to receive the NR-PSS, NR-SSS, NR-PBCH, the DL/UL control signal, or the reference signal transmitted from the network node 30.

The setter 230 stores various setting information received from the network node 30 by the receiver 220 in the storage device and reads the setting information from the storage device as needed. The setter 230 also stores preset setting information. The contents of the setting information are, for example, information relating to a network for which connection is permitted.

The controller 240 performs processing relating to connection control to the network and network slices as described in the embodiment. A functional unit relating to signal transmission in the controller 240 may be included in the transmitter 210, and a functional unit relating to signal reception in the controller 240 may be included in the receiver 220.

### (Hardware configuration)

Block diagrams (Figs. 7 and 8) used in the description of the above embodiments illustrate functional block units. These functional block units (components) are implemented by any combination of hardware and/or software. In addition, the implementation method of each function block is not particularly limited. That is, each functional block may be implemented using a single device that is physically or logically combined, or may be implemented using two or more physically or logically separated devices that are directly or indirectly connected (e.g., via wire, wirelessly, etc.). The functional block units may be implemented by combining software with the device or devices.

Functions include, but are not limited to, judgment, determination, assessment, computation, calculation, processing, derivation, research, search, verification, reception, transmission, output, access, resolution, selection, choices, establishment, comparison, assumption, expectation, and deeming, broadcasting, notifying, communicating, forwarding, configuring, reconfiguring, allocating, mapping, and assigning. For example, a functional block (component) that functions to transmit is called a transmitting unit or a transmitter. In either case, as described above, the implementation method is not particularly limited.

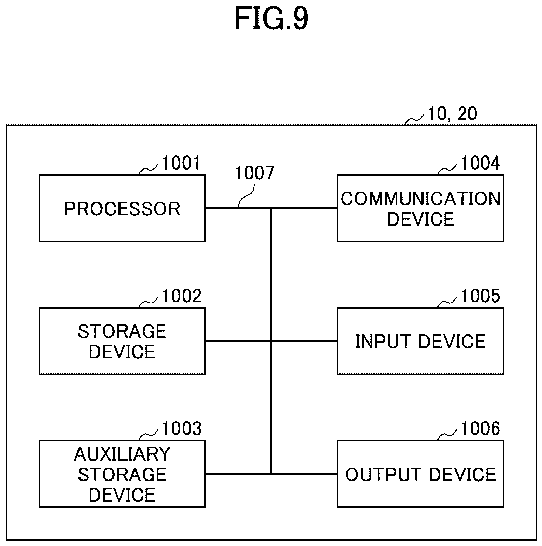

For example, the network node 30, the terminal 20, or the like according to an embodiment of the present disclosure may function as a computer for processing the wireless communication method of the present disclosure. Fig. 9 is a diagram illustrating an example of a hardware configuration of the base station 10 and the terminal 20 according to an embodiment of the present disclosure. The network node 30 may have the same hardware configuration as the base station 10. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as circuits, devices, units, etc. The hardware configuration of the base station 10 and terminal 20 may be configured to include one or more of the devices illustrated in the figure or may be configured without some of the devices.

The functions in the base station 10 and the terminal 20 are implemented by performing operations by the processor 1001 by reading predetermined software (programs) on hardware such as the processor 1001 and the storage device 1002, and controlling communication by the communication device 1004 and controlling at least one of reading and writing of data in the storage device 1002 and the auxiliary storage device 1003.

The processor 1001 operates, for example, an operating system to control the entire computer. The processor 1001 may include a central processing unit (CPU) including an interface with peripheral devices, a controller, an arithmetic unit, a register, and the like. For example, the above-described controller 140, the controller 240, and the like may be implemented by the processor 1001.

The processor 1001 reads a program (program code), software module, data, or the like from at least one of the auxiliary storage device 1003 and the communication device 1004 to the storage device 1002 and performs various processing in accordance with the above. As a program, a program that causes a computer to execute at least a part of the operation described in the above-described embodiment is used. For example, the controller 140 of the base station 10 illustrated in Fig. 7 may be stored in the storage device 1002 and implemented by a control program operating in the processor 1001. For example, the controller 240 of the terminal 20 illustrated in Fig. 8 may be stored in the storage device 1002 and implemented by a control program operating in the processor 1001. Although the foregoing processes have been described and executed by one processor 1001, they may be executed simultaneously or sequentially by two or more processors 1001. The processor 1001 may be implemented by one or more chips. The program may be transmitted from the network via a telecommunication line.

The storage device 1002 is a computer-readable recording medium and may include at least one of, for example, a ROM (Read Only Memory), an EPROM (Erasable Programmable ROM), an EEPROM (Electrically Erasable Programmable ROM), a RAM (Random Access Memory), and the like. The storage device 1002 may be referred to as a register, cache, main memory (main memory), or the like. The storage device 1002 can store programs (program codes), software modules, etc., executable to implement a communication method according to an embodiment of the present disclosure.

The auxiliary storage device 1003 is a computer-readable recording medium and may include at least one of an optical disk, such as a CD-ROM (Compact Disc ROM), a hard disk drive, a flexible disk, a magneto-optical disk (e.g., a compact disk, a digital versatile disk, a Blu-ray disk), a smart card, a flash memory (e.g., a card, a stick, a keydrive), a floppy disk, a magnetic strip, and the like. The storage medium described above may be, for example, a database, a server, or other suitable medium that includes at least one of a storage device 1002 and an auxiliary storage device 1003.

The communication device 1004 is a hardware (transmitting/receiving device) for performing communication between computers via at least one of a wired network and a wireless network, and is also referred to as a network device, a network controller, a network card, a communication module, or the like. The communication device 1004 may include a high frequency switch, duplexer, filter, frequency synthesizer, or the like, for example, to implement at least one of a frequency division duplex (FDD) and a time division duplex (TDD). For example, a transmitting/receiving antenna, an amplifier unit, a transmitter-receiver, a transmission line interface, and the like may be implemented by the communication device 1004. The transmitter-receiver may be physically or logically isolated implementations of a transmitter and a receiver.

The input device 1005 is an input device (e.g., a keyboard, mouse, microphone, switch, button, sensor, etc.) that receives external input. The output device 1006 is an output device (e.g., a display, speaker, LED lamp, etc.) that execute an external output. The input device 1005 and the output device 1006 may have an integral configuration (for example, a touch panel).

Each device, such as a processor 1001 and a storage device 1002, is connected by a bus 1007 for communicating information. Bus 1007 may be constructed using a single bus or may be constructed using different buses between devices.

The base station 10 and terminal 20 may also include hardware such as a microprocessor, a digital signal processor (DSP), an ASIC (Application Specific Integrated Circuit), a PLD (Programmable Logic Device), an FPGA (Field Programmable Gate Array), and some or all of the functional blocks may be implemented by the hardware. For example, the processor 1001 may be implemented using at least one of these hardware components.

### (Summary of embodiments)

As described above, according to the embodiment of the present invention, a terminal is provided. The terminal includes
a transmitter configured to transmit a registration request corresponding to a first network method to a network node in a first PLMN (Public Land Mobile Network);
a receiver configured to receive an authentication request relating to a second PLMN according to a second network method from the network node; and
a controller configured to determine to use an authentication method of the second PLMN, based on the authentication request, the authentication method of the second PLMN being different from an authentication method of the first PLMN, wherein
the transmitter transmits a response corresponding to the authentication method of the second PLMN to the network node.

With the above configuration, AMF/SEAF in a 5G VPLMN can authenticate the UE 20 roaming to the VPLMN even if HPLMN of the UE 20 does not support 5G. That is, authentication can be successfully performed during roaming between different network architectures.

The first PLMN may be VPLMN (Visited PLMN), and the second PLMN may be HPLMN (Home PLMN). With this configuration, AMF/SEAF in the 5G VPLMN can authenticate the UE 20 roaming to the VPLMN even if HPLMN of the UE 20 does not support 5G.

The authentication method of the first PLMN may be 5G-AKA (Authentication and Key Agreement) or EAP (Extensible Authentication Protocol)-AKA' and the authentication method of the second PLMN may be EPS (Evolved Packet System)-AKA. With this configuration, AMF/SEAF in the 5G VPLMN can authenticate the UE 20 roaming to the VPLMN even if HPLMN of the UE 20 does not support 5G.

According to an embodiment of the present invention, a network node is provided. The network node includes
a receiver configured to receive from a terminal a registration request corresponding to a network method of a first PLMN (Public Land Mobile Network) in the first PLMN;
a controller configured to determine to use a network method and an authentication method of a second PLMN, based on the registration request, the network method and the authentication method of the second PLMN being different from the network method and the authentication method of the first PLMN; and
a transmitter configured to transmit an authentication data request relating to the authentication method of the second PLMN to a network node located in the second PLMN, wherein
the receiver receives an authentication vector relating to the authentication method of the second PLMN from the network node located in the second PLMN, and
the transmitter transmits an authentication request based on the authentication vector to the terminal.

With the above configuration, AMF/SEAF in the 5G VPLMN can authenticate the UE 20 roaming to the VPLMN even if HPLMN of the UE 20 does not support 5G. That is, authentication can be successfully performed during roaming between different network architectures.

Further, according to an embodiment of the present invention, a communication method is provided. The communication method includes
transmitting a registration request corresponding to a first network method to a network node in a first PLMN (Public Land Mobile Network);
receiving an authentication request relating to a second PLMN according to a second network method from the network node;
determining to use an authentication method of the second PLMN based on the authentication request, the authentication method of the second PLMN being different from an authentication method of the first PLMN; and
transmitting a response corresponding to the authentication method of the second PLMN to the network node.

With the above configuration, AMF/SEAF in the 5G VPLMN can authenticate the UE 20 roaming to the VPLMN even if HPLMN of the UE 20 does not support 5G. That is, authentication can be successfully performed during roaming between different network architectures.

### (Supplement to embodiments)

Thus, although embodiments of the present invention have been described, the disclosed invention is not limited to such embodiments, and various modifications, modifications, alternatives, substitutions, etc. will be understood by those skilled in the art. Specific numerical examples have been used to facilitate understanding of the invention, but unless otherwise indicated, they are merely examples and any appropriate values may be used. Classification of items in the above description is not essential to the present invention, and the items described in two or more items may be used in combination as needed, or the items described in one item may be applied to the items described in another item (unless there is a conflict). The functional or processing unit boundaries in the functional block diagram do not necessarily correspond to the physical unit boundaries. The operation of the plurality of functions may be performed physically by one component, or the operation of one function may be performed physically by the plurality of components. As for the processing steps described in the embodiment, the order of the processing may be changed unless there is any conflict. For convenience of process description, the network node 30 and the terminal 20 have been described using a functional block diagram, but such devices may be implemented in hardware, software, or a combination thereof. Software operated by processors having network nodes 30 in accordance with embodiments of the present invention and software operated by processors having terminals 20 in accordance with embodiments of the present invention may be stored in random access memory (RAM), flash memory, a read-only memory (ROM), an EPROM, an EEPROM, a register, a hard disk (HDD), a removable disk, a CD-ROM, a database, a server, or any other suitable storage medium.

Information may also be communicated in other ways, as well as in the manner/embodiments described in this disclosure. For example, notification of information may be performed by physical layer signaling (e.g., DCI (Downlink Control Information), UCI (Uplink Control Information), upper layer signaling (e.g., RRC (Radio Resource Control) signaling, MAC (Medium Access Control) signaling, MIB (Master Information Block), SIB (System Information Block)), other signals, or a combination thereof. The RRC signaling may also be referred to as an RRC message, for example, RRC Connection Setup (RRC Connection Setup) message, RRC Connection Reconstruction (RRC Connection Reconfiguration) message, or the like.

Each aspect/embodiment described in this disclosure is as follows: LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000 UMB (Ultra Mobile Broadband), IEEE 802.11 (Wi-Fi), IEEE 802.16 (WiMAX), IEEE 802.20, UWB (Ultra-WideBand), Bluetooth (Registered), It may be applied to at least one of the systems utilizing other appropriate systems and the next generation systems extended thereon. Multiple systems may also be applied in combination (e.g., at least one of LTE and LTE-A combined with 5G, etc.).

The processing steps, sequences, flowcharts, etc. of each aspect/embodiment described herein may be reordered unless there is any conflict. For example, the methods described in the present disclosure are presented using exemplary sequences to present elements of the various steps and are not limited to the particular order presented.

The specific operations described herein as performed by the network node 30 may be performed by its upper node in some cases. In a network of one or more network nodes having a network node 30, it will be apparent that various operations performed for communication with the terminal 20 may be performed by at least one of the network node 30 and other network nodes other than the network node 30 (e.g., but not limited to MME, S-GW, etc.). Although the above illustrates that there is only one other network node other than network node 30, the other network nodes may be a combination of multiple other network nodes (e.g., MME and S-GW) .

The information or signals described in this disclosure can be output from a higher layer (or lower layer) to a lower layer (or higher layer). The information or signals may be input and output through multiple network nodes.

Input and output information may be stored in a specific location (e.g., memory) or managed using management tables. The input and output information may be overwritten, updated, or added. The output information may be deleted. The input information or the like may be transmitted to another device.

The determination in this disclosure may be made by a value (0 or 1) expressed in 1 bit, by a true or false value (Boolean: true or false), or by a numerical comparison (e.g., a comparison with a predetermined value).

Software should be broadly interpreted to mean, whether referred to as software, firmware, middleware, microcode, hardware description language, or any other name, instructions, sets of instructions, code, code segments, program code, programs, subprograms, software modules, applications, software applications, software packages, routines, subroutines, objects, executable files, executable threads, steps, functions, and the like.

Software, instructions, information, and the like may also be transmitted and received via a transmission medium. For example, when software is transmitted from a website, server, or other remote source using at least one of wireline technology (such as coaxial cable, fiber optic cable, twisted pair, digital subscriber line (DSL)) and wireless technology (infrared, microwave, etc.), at least one of these wireline technology and wireless technology is included within the definition of a transmission medium.

The information, signals and the like described in this disclosure may be represented using any of a variety of different techniques. For example, data, instructions, commands, information, signals, bits, symbols, chips, etc., which may be referred to throughout the above description may be represented by voltages, currents, electromagnetic waves, magnetic fields or magnetic particles, optical fields or photons, or any combination thereof.

The terms described in the present disclosure and those necessary for understanding the present disclosure may be replaced by terms having the same or similar meanings. For example, at least one of the channels and the symbols may be a signal (signaling). The signal may also be a message. The component carrier (CC) may also be referred to as a carrier frequency, cell, frequency carrier, or the like.

As used in this disclosure, the terms "system" and "network" are used interchangeably.

The information, parameters, and the like described in the present disclosure may also be expressed using absolute values, relative values from predetermined values, or they may be expressed using corresponding separate information. For example, the wireless resources may be those indicated by an index.

The name used for the parameters described above is not restrictive in any respect. In addition, the mathematical equations using these parameters may differ from those explicitly disclosed in this disclosure. Since the various channels (e.g., PUCCH, PDCCH, etc.) and information elements can be identified by any suitable names, the various names assigned to these various channels and information elements are not in any way limited.

In this disclosure, terms such as "BS: base station", "wireless base station", "base station device", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. The base station may also be referred to as a macrocell, a small cell, a femtocell, a picocell, or the like.

The base station can accommodate one or more (e.g., three) cells. If the base station accommodates a plurality of cells, the entire coverage area of the base station can be divided into a plurality of smaller areas, each of which can also provide communications services via a base station subsystem (e.g., a small indoor base station (RRH) or Remote Radio Head). The term "cell" or "sector" refers to part or all of the coverage area of at least one of the base station and base station subsystem that provides communications services at the coverage.

In this disclosure, terms such as "mobile station (MS)", "user terminal", "user equipment (UE)", "terminal", and the like may be used interchangeably.

The mobile station may be referred to by one of ordinary skill in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be referred to as a transmitter, a receiver, a communication device, or the like. At least one of the base station and the mobile station may be a device mounted on a moving body, the moving body itself, or the like. The moving body may be a vehicle (e.g., a car, an airplane, etc.), an unmanned mobile (e.g., a drone, an automated vehicle, etc.), or a robot (manned or unmanned). At least one of the base station and the mobile station includes a device that does not necessarily move during communication operations. For example, at least one of the base station and the mobile station may be an IoT (Internet of Things) device such as a sensor.

In addition, the base station in the present disclosure may be read by the user terminal. For example, various aspects/embodiments of the present disclosure may be applied for a configuration in which communication between base stations and user terminals is replaced by communication between multiple terminals 20 (e.g., may be referred to as D2D (Device-to-Device), V2X (Vehicle-to-Everything), etc.). In this case, the above-described network node 30 may have the function provided by the terminal 20. The phrases "upstream" and "downstream" may also be replaced by the phrases corresponding to terminal-to-terminal communication (e.g., "side"). For example, an upstream channel, a downstream channel, or the like may be read by a side channel.

Similarly, the user terminal in the present disclosure may be read as the base station. In this case, the base station may have the functions provided by the user terminal described above.

As used in this disclosure, the terms "determination (determining)" and "decision (determining)" may encompass a wide variety of operations. The term "determination" includes, for example, judging, calculating, computing, processing, deriving, investigating, searching (looking up, searching, inquiring) (e.g., searching in tables, databases, or other data structures), ascertaining, and so forth. The terms "determination" and "decision" may also include receiving (e.g., receiving information), transmitting (e.g., sending information), input, output, and accessing (e.g., accessing data in memory) as "judged" and "determined", and the like. The terms "determination" and "decision" may also include "judgment" and "decision" regarding matters such as resolving, selecting, choosing, establishing, comparing, etc. That is, the terms "determination" and the "decision" may include deeming some action to be "determination" and the "decision". The terms "determination" and the "decision" may be read as "assuming", "expecting", "considering", or the like.

The term "connected" or "coupled" or any variation thereof means any direct or indirect connection or connection between two or more elements and may include the presence of one or more intermediate elements between two elements "connected" or "coupled" with each other. The coupling or connection between the elements may be physical, logical, or a combination of these. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS (Reference Signal) or may be referred to as a pilot, depending on the standards applied.

As used in this disclosure, the expression "based on" does not mean "solely" unless otherwise specified. In other words, the expression "based on" means both "solely" and "at least based on".

Any reference to an element using a designation such as "first" or "second" as used in the present disclosure does not generally limit the amount or order of those elements. These designations can be used in the present disclosure as a convenient way to distinguish between two or more elements. Thus, references to the first and second elements do not imply that only two elements may be employed or that the first element must in some way precede the second element.

"Means" in the configuration of each of the above devices may be replaced by "parts," "circuits," "devices," etc.

When the terms "include", "including" and variations thereof are used in the present disclosure, these terms are intended to be comprehensive in the same way as the term the term "comprising". Moreover, the term "or" as used in this disclosure is not intended to be an exclusive-OR.

In the present disclosure, where an article is added by translation, for example a, an, and the English language, the disclosure may include that the noun following these articles is plural.

In this disclosure, the term "A and B are different" may mean "A and B are different from each other." Incidentally, the term may mean "A and B are different from C." Terms such as "separated" or "combined" may be interpreted in the same manner as "different".

The aspects/embodiments described in this disclosure may be used alone, in combination, or switched with implementation. Notice of a given information (e.g. "X" notice) may also be given by implication (e.g. "no notice of the given information"), not explicitly.

SEAF and AMF in this disclosure are examples of network nodes. HSS is an example of a network node located in the second PLMN. The 5G method is an example of a first network method or a first PLMN network method. The 4G method is an example of a second network method or a second PLMN network method.

While the present disclosure has been described in detail above, those skilled in the art will appreciate that the present disclosure is not limited to the embodiments described in the present disclosure. The disclosure may be implemented as modifications and variations without departing from the spirit and scope of the disclosure as defined by the claims. Accordingly, the description of the present disclosure is for illustrative purposes only and is not intended to have any restrictive meaning with respect to the present disclosure.

### EXPLANATION OF REFERENCE NUMERALS

- 10: base station
- 110: transmitter
- 120: receiver
- 130: setter
- 140: controller
- 20: terminal
- 210: transmitter
- 220: receiver
- 230: setter
- 240: controller
- 30: network node
- 1001: processor
- 1002: storage device
- 1003: auxiliary storage device
- 1004: communication device
- 1005: input device
- 1006: output device

## Claims

1. A terminal comprising:
a transmitter configured to transmit a registration request corresponding to a first network method to a network node in a first PLMN (Public Land Mobile Network);
a receiver configured to receive an authentication request relating to a second PLMN according to a second network method from the network node; and
a controller configured to determine to use an authentication method of the second PLMN, based on the authentication request, the authentication method of the second PLMN being different from an authentication method of the first PLMN, wherein
the transmitter transmits a response corresponding to the authentication method of the second PLMN to the network node.

2. The terminal according to claim 1, wherein
the first PLMN is a VPLMN (Visited PLMN), and the second PLMN is a HPLMN (Home PLMN).

3. The terminal according to claim 2, wherein
the authentication method of the first PLMN is 5G-AKA (Authentication and Key Agreement) or EAP (Extensible Authentication Protocol)-AKA', and the authentication method of the second PLMN is EPS (Evolved Packet System)-AKA.

4. A network node comprising:
a receiver configured to receive from a terminal a registration request corresponding to a network method of a first PLMN (Public Land Mobile Network) in the first PLMN;
a controller configured to determine to use a network method and an authentication method of a second PLMN, based on the registration request, the network method and the authentication method of the second PLMN being different from the network method and the authentication method of the first PLMN; and
a transmitter configured to transmit an authentication data request relating to the authentication method of the second PLMN to a network node located in the second PLMN, wherein
the receiver receives an authentication vector relating to the authentication method of the second PLMN from the network node located in the second PLMN, and
the transmitter transmits an authentication request, based on the authentication vector to the terminal.

5. A communication method comprising:
transmitting a registration request corresponding to a first network method to a network node in a first PLMN (Public Land Mobile Network);
receiving an authentication request relating to a second PLMN according to a second network method from the network node;
determining to use an authentication method of the second PLMN, based on the authentication request, the authentication method of the second PLMN being different from an authentication method of the first PLMN; and
transmitting a response corresponding to the authentication method of the second PLMN to the network node.
